(19) Europäisches Patentamt / European Patent Office / Office européen des brevets

(11) **EP 2 545 751 B1**

(12) **EUROPÄISCHE PATENTSCHRIFT**

(45) Veröffentlichungstag und Bekanntmachung des Hinweises auf die Patenterteilung:
**28.09.2016 Patentblatt 2016/39**

(21) Anmeldenummer: **11707863.4**

(22) Anmeldetag: **11.03.2011**

(51) Int Cl.:
**H05B 37/02** *(2006.01)*

(86) Internationale Anmeldenummer:
**PCT/EP2011/053697**

(87) Internationale Veröffentlichungsnummer:
**WO 2011/110663 (15.09.2011 Gazette 2011/37)**

(54) **BUS -GEBÄUDETECHNIKSYSTEM MIT DAISY-CHAIN TOPOLOGIE**

BUS-TYPE BUILDING SERVICES ENGINEERING SYSTEM WITH DAISY-CHAIN TOPOLOGY

SYSTÈME D'ÉQUIPEMENT DE BÂTIMENT UTILISANT UN BUS DE COMMUNICATION PRÉSENTANT UN BRANCHEMENT EN SÉRIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.03.2010 DE 102010002758**

(43) Veröffentlichungstag der Anmeldung:
**16.01.2013 Patentblatt 2013/03**

(73) Patentinhaber: **Tridonic GmbH & Co KG**
**6851 Dornbirn (AT)**

(72) Erfinder: **KOCH, Patrick Yves**
**88085 Langenargen (DE)**

(74) Vertreter: **Rupp, Christian et al**
**Mitscherlich PartmbB**
**Patent- und Rechtsanwälte**
**Sonnenstraße 33**
**80331 München (DE)**

(56) Entgegenhaltungen:
EP-A1- 1 320 222          WO-A1-2009/040014
WO-A2-2006/107199     WO-A2-2009/011898
US-A1- 2004 160 199

**Beschreibung**

Die Erfindung bezieht sich allgemein auf das Gebiet busfähiger Betriebsgeräte für Leuchtmittel, die Teilnehmer in einem Bussystem sind, das auch anders geartete Gebäudetechnik-Teilnehmer (Sensoren wie bspw. Tageslichtsensoren, Aktoren wie bspw. Klimasteuerung oder Jalousien) aufweisen kann. Natürlich können auch Betriebsgeräte für unterschiedliche Leuchtmittel Teilnehmer desselben Bussystems sein.

In der Gebäudetechnik wird einem busfähigen und adressierbaren Betriebsgerät für Leuchtmittel, beispielsweise einem elektronischen Vorschaltgerät für Gasentladungslampen oder Leuchtdioden (LEDs, OLEDs) üblicherweise zwecks der Ansteuerung eine Adresse zugewiesen. Damit auf gesendete Befehle das gewünschte Betriebsgerät samt Leuchtmitteln auch reagiert, soll die örtliche Verteilung der Betriebsgeräte vorab bekannt werden. Zur örtlichen Bestimmung der Betriebsgeräte bei der Inbetriebnahme eines Beleuchtungssystems sind mehrere Verfahren ausführbar. Bei einem bekannten Verfahren werden z.B. die Betriebsgeräte vorab adressiert, und anschließend an der geplanten Stelle im Raum bzw. Gebäude montiert. Bei einem anderen Verfahren werden die Betriebsgeräte nach der Montage adressiert, und anschließend örtlich lokalisiert und dem Raum bzw. Gebäude zugeordnet.

Wie in Fig. 1 ersichtlich ist es aus der WO2009/040014A1 als Stand der Technik bereits bekannt, die Betriebsgeräte 1, 2, 3 über einen an ein Steuergerät 6 angeschlossenen Bus 4 sowie über eine zusätzliche ringförmige Struktur 5 zu verbinden. Die ringförmige Struktur 5 ist derart ausgestaltet, dass jedes Betriebsgerät 2 einen Empfänger 7 und einen Sender 8 aufweist. Dabei werden die Daten vom vorausgehenden Betriebsgerät 1 empfangen, und zum nachfolgenden Betriebsgerät 3 gesendet. Jedes Betriebsgerät 1 verfügt über zwei Anschlüsse 9, 10 zum Anschließen an den Bus 4.

Gemäß diesem Stand der Technik scheint die Adressvergabe mittels der ringförmigen Struktur 5 zu erfolgen. Diese Struktur ist als Bus in einer Daisy-Chain Topologie ausgebildet.

Zudem sind die Druckschriften US 2004/0160199 A1, WO 2006/107199 A2, WO 2009/011898 A2 und EP 1 320 222 A1 bekannt.

Als "Daisy Chain" wird dabei in der Bustechnik (und auch im Rahmen der vorliegenden Erfindung) eine Anzahl von Bus-Teilnehmern verstanden, welche in Serie miteinander verbunden sind. Dabei ist der erste Teilnehmer direkt mit einer Zentraleinheit oder einer Master-Einheit verbunden. Die weiteren Teilnehmer sind in einer Reihenschaltung mit den benachbarten Teilnehmern zur Bildung einer Daisy Chain Kette verbunden.

Die Rückmeldung von den Betriebsgeräten 1, 2, 3 erfolgt indessen bei der WO2009/040014A1 über den zusätzlich, separat vorgesehenen Bus 4. Es ist allerdings hier nachteilig, dass für die Adressierung und die Übertragung von Betriebsdaten zwei Strukturen bzw. zwei Busse im System vorhanden sein müssen.

Es ist deshalb Aufgabe der vorliegenden Erfindung, eine Bus-Topologie und eine Teilnehmer-Struktur vorzuschlagen, welche die oben genannten Nachteile beheben. Der vorliegenden Erfindung liegt insbesondere nunmehr die Aufgabe zugrunde, eine alternative bzw. einfachere Topologie anzugeben.

Die Aufgabe der vorliegenden Erfindung wird durch den Gegenstand der unabhängigen Ansprüche gelöst. Vorteilhafte Weiterbildungen der Erfindung sind Gegenstand der Unteransprüche.

Gemäß einem ersten Aspekt der Erfindung ist vorgesehen ein Verfahren zum Betrieb eines Gebäudetechnik-Bussystems, das mehrere Teilnehmer, darunter wenigstens einen Teilnehmer in Form eines Betriebsgeräts für Leuchtmittel aufweist, wobei ein Teilnehmer als Master ausgebildet ist und andere Teilnehmer als Slave ausgebildet sind,

    a) wobei die mehreren Teilnehmer in Form eines Daisy Chain Bus kommunizieren,
    b) wobei der Daisy Chain Bus wenigstens für eine Phase einer Vergabe einer Adresse an die Teilnehmer und eine Phase eines Leuchtbetriebs der an das Betriebsgerät angeschlossenen Leuchtmittel zur Kommunikation verwendet wird, und
    c) wobei der Adressvergabevorgang von dem als Master ausgebildeten Teilnehmer ausgelöst wird,
    **dadurch gekennzeichnet, dass**
    d) der Master einem ersten Slave, der in Serie mit dem Master verbunden ist, eine Startadresse zuweist;
    e) wobei jeder als Slave ausgebildeter Teilnehmer eine für ihn bestimmte Startadresse für einen ersten benötigten Steuerungskanal, sowie eine Anzahl von zusätzlichen Adressen für zusätzlich benötigte Steuerungskanäle besetzt;
    f) wobei ein vorstehender Slave (22), der in Serie mit einem nachstehenden Slave (23) verbunden ist, folgende Information an den nachstehenden Slave (23) sendet:

        i) die für den nachstehenden Slave als nächstes zur Verfügung stehende Adresse,
        ii) oder, alternativ, die letzt-besetze Adresse, sodass aus dieser Information die Startadresse (Adr3) für den nachstehenden Slave (23) gewonnen wird.

Nach der Adressvergabe, bspw. in der Phase des Leuchtbetriebs, können von einem weiteren Teilnehmer, einer Master-Einheit und/oder von einer Zentraleinheit Steuerbefehle, bspw. Dimmbefehle adressiert an das Betriebsgerät übermittelt werden.

Zur Bildung einer Ringbustopologie kann zusätzlich zu dem Daisy-Chain Bus ein Rückkanal vorgesehen sein, über den die Teilnehmer Daten aussenden.

Der Adressvergabevorgang wird von einem als Master ausgebildeten Teilnehmer ausgelöst, wobei andere

als Slave ausgebildete Teilnehmer eine jeweilige Adresse zugewiesen bekommen (S3, S5).

Dabei besetzt ein erster Slave, der in Serie mit dem Master verbunden ist, eine erste vom Master empfangene (S3) Startadresse (Adr1) sowie vorzugsweise eine Anzahl (Chn2) von zusätzlichen Adressen für Steuerungskanäle.

Dabei kann die Startadresse (Adr1) eines vorstehenden Slaves, der in Serie mit einem nachstehenden Slave verbunden ist, sowie vorzugsweise die Anzahl (Chn2) seiner zusätzlichen Adressen für Steuerungskanäle von dem vorstehenden Slave zu dem nachstehenden Slave gesendet werden.

Dabei kann aus der Startadresse (Adr1) eines vorstehenden Slaves, der in Serie mit einem nachstehenden Slave verbunden ist, sowie vorzugsweise aus der Anzahl (Chn2) seiner zusätzlichen Adressen für Steuerungskanäle die Startadresse (Adr3) für den nachstehenden Slave gewonnen werden.

Dabei besetzt der nachstehende Slave die für ihn bestimmte Startadresse (Adr3) sowie vorzugsweise eine Anzahl (Chn3) von zusätzlichen Adressen für Steuerungskanäle.

Dabei kann optional der letzte Slave, der eine Adresse zugewiesen bekommt, dem Master über den Bus eine Nachricht senden (S7), derart dass der Master aus dem Empfang dieser Nachricht auf den Abschluss des Adressvergabevorgangs schließen kann. Die Nachricht kann noch mehr Information enthalten, bspw. die zuletzt vergebene Adresse. Aus dieser zusätzlichen Information kann der Master auf die im System vorliegenden und somit ansteuerbaren Adressen und/oder bei gleicher Kanalzahl pro Slave auf die Anzahl der Slaves im System steuern.

Der Master kann nach Zuweisung einer Startadresse an den ersten Slave gesperrt werden, sodass der Master für eine gewisse Zeit keine Daten senden darf, um mögliche Konflikte auf dem Bus zu verhindern. Der Adressvergabevorgang kann nach einem vorgegebenen Zeitablauf, in dem der Master gesperrt ist, abgeschlossen werden.

Der Master kann einen Rückmeldungsbefehl über den Bus senden (S11), woraufhin sukzessiv die hintereinander folgenden Slaves vom Master geforderte Daten bzw. Betriebsdaten aussenden (S13, S15).

Die Daten können dem Master (21) über den Bus (29) gesendet werden, oder als visuelles oder akustisches Signal via entsprechende visuelle oder akustische Mittel kodiert werden.

Während des Aussendens (S13, S15) von Daten kann der Master (21) gesperrt sein.

Ein weiterer Aspekt der Erfindung bezieht sich auf ein Bus-Gebäudetechniksystem, das mehrere Teilnehmer, darunter wenigstens einen Teilnehmer in Form eines Betriebsgeräts für Leuchtmittel aufweist, wobei ein Teilnehmer als Master ausgebildet ist und andere Teilnehmer als Slave ausgebildet sind,

> **a)** wobei die mehreren Teilnehmer in Form eines Daisy Chain Bus kommunizieren,
> **b)** wobei der Daisy Chain Bus wenigstens für die Phase einer Vergabe einer Adresse an die Teilnehmer und eine Phase eines Leuchtbetriebs der an das Betriebsgerät angeschlossenen Leuchtmittel zur Kommunikation verwendet wird,
> **c)** wobei der Adressvergabevorgang von dem als Master ausgebildeten Teilnehmer ausgelöst wird, **dadurch gekennzeichnet, dass**
> **d)** der Master einem ersten Slave, der in Serie mit dem Master verbunden ist, eine Startadresse zuweist;
> **e)** wobei jeder als Slave ausgebildeter Teilnehmer eine für ihn bestimmte Startadresse für einen ersten benötigten Steuerungskanal, sowie eine Anzahl von zusätzlichen Adressen für zusätzlich benötigte Steuerungskanäle besetzt;
> **f)** wobei ein vorstehender Slave, der in Serie mit einem nachstehenden Slave verbunden ist, folgende Information an den nachstehenden Slave sendet:
>
> > **i)** die für den nachstehenden Slave als nächstes zur Verfügung stehende Adresse,
> > **ii)** oder, alternativ, die letzt-besetze Adresse, sodass aus dieser Information die Startadresse für den nachstehenden Slave gewonnen wird.

In einer Phase zeitlich nach der Adressvergabe, insbesondere in der Phase des Leuchtbetriebs können dabei von einem weiteren Teilnehmer, einer Master-Einheit und/oder von einer Zentraleinheit Steuerbefehle, bspw. Dimmbefehle adressiert an das Betriebsgerät übermittelt werden.

Zur Bildung einer Ringbustopologie kann zusätzlich zu dem Daisy Chain Bus ein Rückkanal vorgesehen sein, über den Teilnehmer Daten aussenden.

Ein Vorteil der Erfindung ist es außerdem, dass die Adressierung der Teilnehmer am Bus selbsttätig erfolgt. Der Master startet nämlich eine Adressierung die von den Teilnehmern selbsttätig fortgeführt wird.

Ein weiterer Vorteil ist es, dass eine bestehende Adressierung von Teilnehmern über den Bus an den Master übertragen werden kann. Dadurch kann der Master Kenntnis vom Anlagenabbild erlangen und eine entsprechende Konfiguration der Beleuchtung erfolgen.

Gemäß einer Ausführungsform der Erfindung ist eine Ringbustopologie für Beleuchtungstechnik vorgesehen, wobei wenigstens einer der Busteilnehmer ein Betriebsgerät für Leuchtmittel ist. Dabei wird der Ringbus sowohl für die Adressvergabe wie auch die Übertragung von Betriebsdaten in der folgenden Phase verwendet.

Ein weiterer Aspekt ist dann die konkrete Adressvergabe, wobei der Adressvergabevorgang von einem Master ausgelöst wird. Ein jeweils folgender Busteilnehmer der Daisy-Chain besetzt die entsprechende Startadresse und falls vorhanden, auch mehrere Kanäle. Danach ist der in der Daisy-Chain folgende Teilnehmer für die Adress- und Kanalvergabe an der Reihe. Der Adressvergabeprozess kann abgeschlossen werden nach einem vorgegebenen Zeitablauf, in dem der Master gesperrt ist. Alternativ oder zusätzlich kann auch ein Rückkanal ("Back Loop") vorgesehen sein, um somit eine Ringtopologie zu bilden, wobei aufgrund der unidirektionalen Ausgestaltung des Daisy Chain Busses nur über diesen Back Loop Kanal dem Master von einem Teilnehmer Information zurückgesendet werden kann, bspw. die Information über den Abschluss des Adressvergabeprozesses.

Ein weiterer Aspekt ist die Analyse eines bestehenden Daisy-Chain-Bussystems mit mehreren Teilnehmern. Die Adressvergabe kann zuvor bspw. gemäß der vorigen Beschreibung ausgeführt worden sein, es können aber bspw. auch zur Adressierung manuelle Schalter, Widerstände, etc. an den einzelnen Geräten gestellt worden sein. Der Master schickt nunmehr einen Analysebefehl aus, woraufhin sukzessiv die hintereinander folgenden Teilnehmer der Daisy-Chain die zu analysierenden Daten (Adressierung, Kanalnummer, andere Eigenschaften des Busteilnehmers) aussenden. Es handelt sich dabei nicht um einen bidirektionalen Bus, so dass die entsprechende ausgesandte Information nur über die folgenden Teilnehmer der Daisy-Chain und dann über die Loop Back zum Master gesandt werden kann. Der Master ist während der Analysephase gesperrt. Ein Teilnehmer, der die zu analysierenden Daten ausgesandt hat, sperrt sich daraufhin und ermöglicht es dem folgenden Teilnehmer wiederum seine Analysedaten auszusenden.

Vorteil gegenüber der WO2009/040014A1 ist wiederum, dass nur ein geringerer Verdrahtungsaufwand vorliegt, da es nicht zwei separate Bussysteme gibt und die Ringtopologie für Adressvergabe, Feldanalyse und Nutzdatenübertragung verwendet wird.

Im Folgenden wird der Erfindungsgegenstand anhand von bevorzugten Ausführungsbeispielen, welche in den beiliegenden Zeichnungen dargestellt sind, näher erläutert.

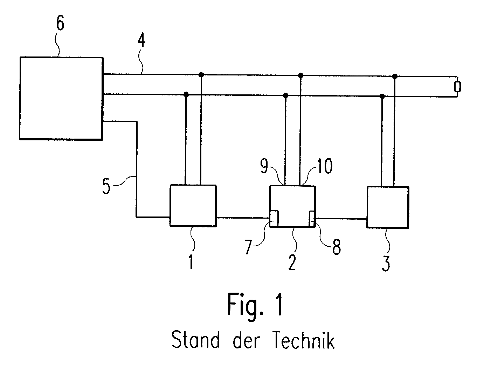

Fig. 1 zeigt eine schematische Darstellung eines Kommunikationssystems für ein Steuergerät und mehrere Betriebsgeräte für Leuchtmittel gemäß dem Stand der Technik.

Fig. 2 bis Fig. 5 zeigen eine schematische Darstellung eines erfindungsgemäßen Gebäudetechnik-Systems im Laufe der Adressierung.

Fig. 6 bis Fig. 9 zeigen eine schematische Darstellung eines erfindungsgemäßen Gebäudetechnik-Systems im Laufe der Rückmeldung von Betriebsdaten wie beispielsweise Teilnehmeradressen.

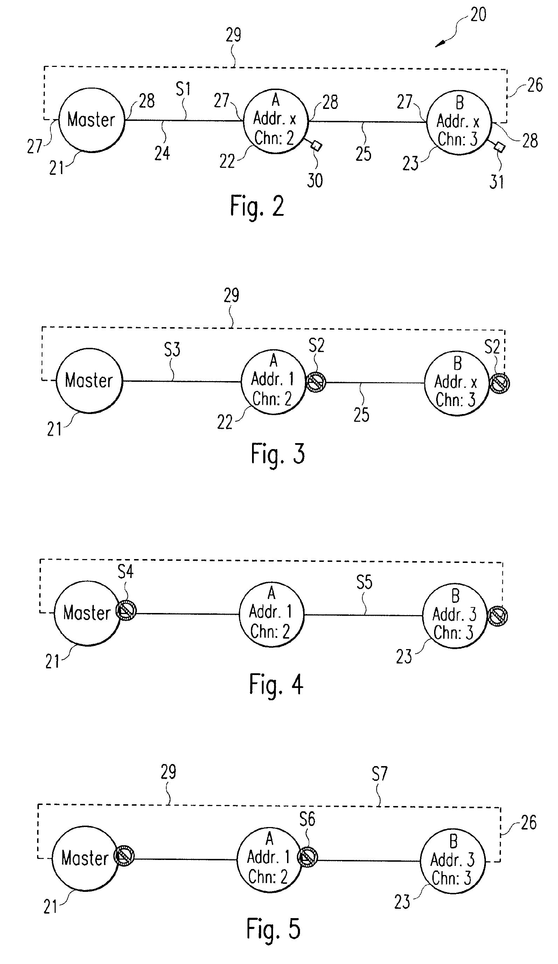

Fig. 2 ist eine schematische Darstellung eines erfindungsgemäßen Gebäudetechnik-Systems 20 mit einem Bus 29 und verschiedenen Teilnehmern 21, 22, 23. Unter den Teilnehmern befinden sich mindestens ein sogenannter Master 21 und mindestens ein Slave 22, 23. Vorzugsweise weist das System 20 nur einen Master 21 auf.

Der Master 21 kann bspw. eine zentrale Steuereinheit sein, aber auch ein weiteres Betriebsgerät.

Das System 20 ist in Form eines Bus-Systems ausgestaltet, und weist eine Daisy-Chain Topologie auf. Die Teilnehmer 21, 22, 23 sind demgemäß über den Bus 29 in Serie miteinander verbunden. Der Bus weist vorzugsweise mehrere Leitungen 24, 25, 26 zum Verbinden der einzelnen Teilnehmer untereinander und in Serie.

Wie in Fig. 2 ersichtlich verbindet eine erste Leitung 24 den Master 21 und einen ersten Slave 22. Der erste Slave ist weiterhin mit einem zweiten Slave 23 über eine zweite Leitung 25 verbunden. Vorzugsweise ist die Daisy Chain Topologie derart erweitert, dass über einen Rückkanal (dritte) Leitung 26 auch der zweite Slave 23 mit dem Master verbunden, so dass das Bus-System 20 nach einer Ringtopologie aufgebaut ist.

Die Teilnehmer 21, 22, 23 sind also jeweils nur mit einem benachbarten Vorgänger und einem Nachfolger verbunden. Daten bzw. ein Signal, das vom Master 21 zum zweiten Slave 23 übertragen werden soll, wird also zunächst zum ersten Slave 22 übertragen, der das Signal dem zweiten Slave 23 weiterleitet.

Zur Übertragung von Daten sind vorzugsweise Prioritäten vorgesehen. Um zu verhindern, dass mehrere Teilnehmer gleichzeitig im System 20 Daten übermitteln, hat der Master 21 üblicherweise Vorrang gegenüber den Slaves 22, 23. Der Master 21 ist vorzugsweise der einzige Teilnehmer 21, 22, 23, der unaufgefordert Daten im System 20 übersenden kann. Mit anderen Worten ist alleine der Master 21 berechtigt, auf die Ressourcen des Systems zuzugreifen. Die Slaves 22, 23 können dann Daten über das System 20 und insbesondere über die Leitungen 24, 25, 26 des Systems 20 senden, wenn sie vom Master 21 dazu aufgefordert werden.

Im System 20 verläuft außerdem die Datenkommunikation vorzugsweise unidirektionnal. Das heißt, dass über die erste Leitung 24 nur Daten vom Master 21 zum ersten Slave 22 übertragen werden können. Vorzugsweise ist also die Kommunikation in der Daisy Chain unidirektional. Jeder Teilnehmer 21, 22, 23 weist demnach auch einen Eingang bzw. einen Empfänger 27 und einen Ausgang bzw. Sender 28. Daten werden von einem vorausgehenden Teilnehmer über den Eingang 27 empfangen, und zum nachfolgenden Teilnehmer über den Ausgang 28 gesendet.

Der Bus 29 ist vorzugsweise ein digitaler Bus bzw. der Bus 29 unterstützt vorzugsweise digitale Steuerprotokolle. Ein erstes Beispiel für solch ein digitales Protokoll in der Gebäudetechnik ist das für Beleuchtungsanlagen ausgelegte DALI (Digital Addressable Lighting Interface) Protokoll. Ein anderes Beispiel für ein vom Bus 29 unterstütztes Protokoll ist das DMX (Digital Multiplex) Protokoll, das insbesondere in der Lichttechnik zur Steuerung von Dimmern benutzt werden kann.

Die Slaves 22, 23 können jeweils als Gebäudetechnik-Betriebsgerät, insbesondere Betriebsgerät oder für mindestens ein Leuchtmittel (LED, OLED, Gasentladungslampe, Glühbirne, Halogen, Hochdrucklampe, ...) ausgestaltet sein. Zusätzlich zum Master 21, weist das System 20 indessen wenigstens ein Betriebsgerät auf. Im Ausführungsbeispiel der Fig. 2 ist der erste Slave ein Betriebsgerät für ein erstes Leuchtmittel 30. Der zweite Slave ist ein Betriebsgerät für ein zweites Leuchtmittel 31.

Die Erfindung schlägt nunmehr ein Verfahren zur Adressierung der Teilnehmer vor. Das Verfahren wird am Beispiel eines DMX-Busses 29 beschrieben. Das erfindungsgemäße Verfahren kann auch mit einem alternativen System bzw. Bus benutzt werden. Das Verfahren wird anhand einer DMX-512 Datenübertragung erläutert, ist jedoch nicht auf diese beschränkt. Einzige Bedingung ist eine Daisy-Chain Verbindung, i.e. eine Serienverbindung, der Teilnehmer 21, 22, 23 untereinander.

Eine derartige Adressierung ist notwendig, da beispielsweise beim einem DMX-Steuerbus jeder Teilnehmer vor dem Betrieb in der Regel einzeln am Gerät adressiert werden muß. Jeder Teilnehmer besitzt eine sogenannte Startadresse und eine bestimmte Anzahl von Kanälen. Die Anzahl von Kanälen ist abhängig von den Merkmalen bzw. Features des angeschlossenen Leuchtmittels. Sogenannte RGB-Farbleuchte besitzen zum Beispiel oft drei Kanäle, um jeweils die rote, die grüne und die blaue Farbe bspw. hinsichtlich ihrer Leuchtstärke unabhängig ansteuern zu können. In Fig. 2 besitzt der als Betriebsgerät ausgestaltete erste Slave 22 zwei Kanäle (Chn: 2). Der zweite Slave 23 benötigt indessen in diesem Beispiel drei DMX-Kanäle (Chn: 3).

Fig. 2 zeigt die erste Phase der Adressierung im System 20. Der Master 21 sendet über den Bus 29 des Systems 20 eine Nachricht (Schritt S1), die alle Teilnehmer bzw. Slaves 22, 23 dazu auffordert, ihren Ausgang 28 zu sperren (Schritt S2). Nachdem der erste Slave 22 diese Nachricht empfängt, sendet er sie dem nachfolgenden zweiten Slave 23 weiter. Anschließend sperrt S2 der erste Slave 22 seinen Ausgang, d.h. er sendet bis auf weiteres keine Daten mehr. Bei einer Sperrung bleibt der erste Slave 22 mit der zweiten Leitung 25 elektrisch verbunden, überträgt aber darauf keine Signale. Das Gleiche gilt für jeden weiteren Slave. Die Slaves 22, 23 haben zu diesem Zeitpunkt noch keine zugeteilte Betriebsadresse bzw. sie haben eine bspw. werksseitig vergebene Adresse.

In Fig. 3 ist zu sehen, dass die Ausgänge der Slaves 22, 23 gesperrt sind (S2). Der Master 21 weist nun dem ersten Slave 22 die Adresse "1" zu S3, bzw. der über die erste Leitung 24 mit dem Master 21 verbundene erste Slave 22 setzt seine Adresse auf "1" (Addr. 1). Der erste Slave 22 besetzt nun die entsprechende Startadresse.

Fig. 4 zeigt, dass in einem nächsten Schritt der Master gesperrt wird (Schritt S4). Der Master darf also für eine gewisse Zeit über seinen Ausgang 28 keine Daten senden, um mögliche Konflikte auf dem Bus 29 zu verhindern. Nachdem der Master 21 den Adressvergabevorgang dadurch ausgelöst hat, dass er dem ersten Slave 22 eine Adresse zugewiesen hat, sendet der Master vorzugsweise für einen bestimmten Zeitraum T1 keine Signale auf dem Bus 29:

$$T1 = A * D$$

wobei A die maximale Adressanzahl und D die zeitliche Dauer einer Einzeladressierung wiedergeben. Bei einer DMX-512 Datenübertragung gilt beispielsweise A=512.

In einem nächsten Schritt setzt der erste Slave 22 den Adressvorgabevorgang fort, indem er dem zweiten Slave 23 eine entsprechende Nachricht übersendet S5. Der erste Slave 22 sendet die für den zweiten Slave 23 als nächstes zur Verfügung stehende Adresse. Da der erste Slave 22 selber die Adresse "1" hat und in diesem Beispiel zwei DMX-Kanäle benötigt sind bereits die zwei ersten Adressen benutzt. Die nächste freie Adresse, also die Adresse "3", wird dem zweiten Slave 23 gesendet. Daraufhin setzt der zweite Slave 23 seine Adresse auf "3".

Die Anzahl von Kanälen von wenigstens zwei Slaves des Systems ist im dargestellten Beispiel unterschiedlich. Sie kann indessen auch für alle Slaves oder zumindest für eine Untergruppe, aufweisend zwei oder mehr Slaves, identisch sein.

Die Startadresse eines jeden Teilnehmers ist also gleichzeitig auch der erste der benötigten Kanäle.

Nachdem der erste Slave 22 dem zweiten Slave 23 die Nachricht übersendet hat S5, sperrt er seinen Ausgang 28 und sendet für eine Zeitdauer T2 kein Signal mehr S6:

$$T2 = (A - Adr1) * D$$

wobei A die maximale Adressanzahl, Adr1 die eigene Adresse vom ersten Slave 22 und D die Dauer einer Einzeladressierung wiedergeben. Im vorliegenden Beispiel gilt Adr1=1.

In einem nächsten Schritt kann - bei Vorhandensein der optionalen dritten Leitung 26 zwischen dem letzten (hier : zweiten) Slave 23 und dem Master 21 - der zweite Slave 23 dem Master 21 ein Signal senden (Schritt S7), das dem Master 21 den Abschluss der Adressierung mitteilt. Ähnlich wie bei der Sperrung des ersten Slaves wird nun vorzugsweise der zweite Slave 23 für eine Zeitdauer T3 gesperrt:

$$T3 = (A - Adr3) * D$$

wobei A die maximale Adressanzahl, Adr3 die eigene Adresse vom zweiten Slave 23 und D die Dauer einer Einzeladressierung wiedergeben. Im vorliegenden Beispiel gilt Adr3=3.

Das Signal, das vom zweiten Slave 23 dem Master 21 über den Bus 29 gesendet wird, siehe Fig. 5, enthält vorzugsweise die nächste freie Adresse. Entsprechend der eigenen Adresse vom zweiten Slave 23 ("3") und der Anzahl der von diesem benötigten DMX-Kanäle ("3") ist die nächste freie Adresse die Adresse "6". Diese wird also über den Bus 29 weitergeleitet S7.

Falls optional eine elektrische Verbindung vom zweiten Slave 23 zum Master 21 besteht, beispielsweise in Form der in Fig. 5 gezeigte dritte Leitung 26, empfängt der Master 21 ein Signal aufweisend die nächste zu vergebende Adresse ("6"), und erkennt dadurch, dass der Adressierungsvorgang abgeschlossen ist.

Wenn die Verbindung 26 vorhanden ist, erhält der Master 21 gemäss einem Ausführungsbeispiel vom letzten Slave die Information übersandt, bis zu welcher Adresszahl Adressen vergeben wurden. Der Master 21 kann dadurch bspw. auf die anzusteuernden Slaves und deren Kanäle schliessen uns somit das Ansteuern von nicht vorhandenen Adressen ausschließen.

Bei Slaves mit identischer Kanalzahl im System und Kenntnis der Gesamtzahl an Kanälen der Slaves, ermittelt bspw. wie oben erwähnt über die vergebenen Adressen kann der Master somit einen Rückschluss auf die Anzahl der angeschlossenen Slaves vollziehen.

Bei dem soeben beschriebenen Adressvergabeverfahren wird von jedem Teilnehmer jeweils die nächste freie Adresse weitergeleitet: der Master 21 sendet somit dem ersten Slave 22 die Adresse "1", der erste Slave 22 sendet dem zweiten Slave 23 die Adresse "3", und der zweite Slave 23 sendet dem Master 21 die Adresse "6". Alternativ kann auch jeweils die letzt-besetzte Adresse gesendet werden, d.h. "0", "2" bzw. "5", wobei der Empfänger dann einfach die nächste Adresse für sich selbst übernimmt.

Bei diesem Adressierungsverfahren kann vorzugsweise der Eingang 27 eines Teilnehmers solange gesperrt werden, wie dieser über seinen Ausgang 28 selbst sendet.

Die Verbindung zum Master 21 in Form der dritten Leitung zwischen zweitem Slave 23 und Master 21 ist bei der Adressierung optional. Das Verfahren funktioniert auch ohne Rückmeldung zum Master 21. Um sicherzustellen, dass das Adressierungsverfahren abgeschlossen worden ist, und dass jeder Teilnehmer eine Adresse erteilt bekommen hat, muss der Master 21 nur lange genug warten.

Die Erfindung schlägt weiterhin ein Verfahren zur Rückmeldung (sogenanntes "Loop Back") der Teilnehmeradressen an den Master 21 vor. Gemäß einer Ausführungsform der Erfindung ist eine Bedingung für eine solche Rückmeldung mindestens eine temporäre Verbindung zwischen dem zweiten Slave 23, i.e. dem letzten Teilnehmer, und dem Master 21.

Der Master 21 schickt nunmehr einen Analysebefehl aus, woraufhin sukzessiv die hintereinander folgenden Teilnehmer der Daisy-Chain als Antwort auf den Analysebefehl die zu analysierenden Daten aussenden. Dabei kann es sich bspw. um die Teilnehmeradresse, die Kanalnummer, oder um andere Eigenschaften des Busteilnehmers handeln.

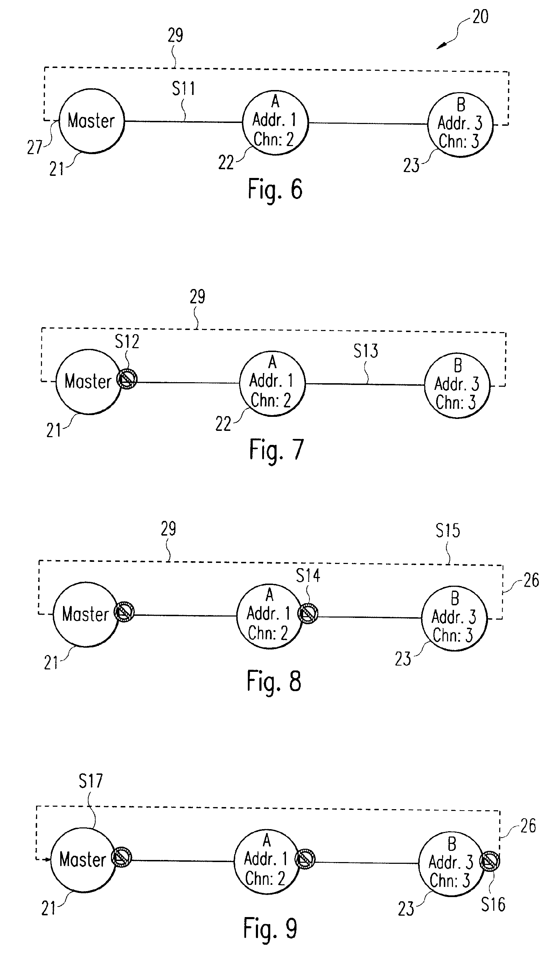

Wie aus Fig. 6 ersichtlich sendet zunächst der Master einen Befehl zur Rückmeldung eines Parameters, vorzugsweise zur Rückmeldung der Teilnehmeradressen, aus S11. Dieser Befehl wird von jedem Slave 21, 22 weitergeleitet, so dass alle Teilnehmer im System 20 den Befehl auch erhalten.

Daraufhin wird der Master 21 gesperrt S12, d.h. er sendet auf dem Bus 29 für einen Zeitraum X keinen Befehl mehr, siehe Fig. 7.

In einem nächsten Schritt sendet der erste Slave 22 seine eigene Adresse "1" auf dem Bus 29. Zusätzlich dazu sendet der erste Slave 22 auch die Startadresse, die er vorab im Adressierungsverfahren dem zweiten Slave 23 geschickt hat. Diese Startadresse ist, wie oben gesehen, die nächste freie Adresse, die vom zweiten Slave 23 benutzt werden kann. Im Ausführungsbeispiel ist diese Startadresse die "3". Diese Information bestehend aus der eigenen Adresse "1" und der zuvor berechnete nächste freie Adresse "3" wird dem Master 21 weitergeleitet 13.

Der Master kann aus dieser empfangenen Information bzw. Rückmeldung die Startadresse Adr1 des ersten Slaves 22 sowie die Anzahl der von diesem benötigten DMX-Kanäle Chn2:

$$Chn2 = F2 - Adr1$$

$$Chn2 = 3 - 1 = 2$$

wobei Chn2 die Anzahl der vom ersten Slave benötigten Kanäle wiedergibt,
F2 die vom ersten Slave im Adressierungsverfahren berechnete nächste freie Adresse, die vom nächststehenden Teilnehmer benutzt werden kann, und
Adr1 die Startadresse des ersten Slaves 22.

Anschließend sperrt S14 der erste Slave 22 für einen gewissen Zeitraum seinen Ausgang, sehe Fig. 8.

In einem nächsten Schritt sendet S15 der zweite Slave 23 auf dem Bus 29 seine eigene Adresse Adr3=3, sowie die Startadresse F3=6 die er im Adressierungsvorgang an seinen Nachfolger über die dritte Leitung 26 geschickt hat. Diese Information wird vom Master 21 empfangen und verarbeitet. Ähnlich wie bei der vom ersten Slave gesendete Information, kann der Master aus dieser Rückmeldung die Startadresse Adr3 direkt ablesen, und die Anzahl der vom zweiten Slave 23 benötigten DMX-Kanäle Chn3 ableiten:

$$Chn3 = F3 - Adr3$$

$$Chn3 = 6 - 3 = 3$$

wobei Chn3 die Anzahl der vom zweiten Slave benötigten Kanäle wiedergibt, F3 die vom zweiten Slave im Adressierungsverfahren berechnete nächste freie Adresse, und Adr3 die Startadresse des zweiten Slaves 23.

Anschließend sperrt der zweite Slave 23 für einen bestimmten Zeitraum seinen Ausgang S16, siehe Fig. 9.

Nach Ablauf einer bestimmten Zeitdauer, in der der Master 21 keine Rückmeldung von anderen Teilnehmern bzw. von den Slaves 22, 23 empfangen hat, schließt er das Rückmeldungsverfahren S17. Anschließend sendet der Master auf dem Bus 29 vorzugsweise noch ein Signal zum Start des Normalbetriebs des Systems 20 bzw. zur Auflösung der Sperrungen der Slaves 22, 23.

Mittels dieses Rückmeldungsverfahrens ist der Master 21 in der Lage, für jeden Slave 22, 23 die Startadresse und die Anzahl der Kanäle zu ermitteln, so dass er im Normalbetrieb alle Slaves ansteuern kann.

Zusätzlich kann beim Senden der Startadresse eine Gerätekennung mitgesendet werden. Eine solche Kennung kann z.B. definieren, um was für ein Gerät es sich handelt. Ein Beispiel einer Gerätekennung kann sein: Farbleuchte "xy" mit Bestückung "uvw".

Das Rückmeldungsverfahren kann auch ohne Rückleitung oder Loop Back 26 zwischen dem letzten Slave 23 und dem Master 21 erfolgen. Anstelle dass die Slaves 22, 23 sukzessiv Daten zum Master 21 senden S13, S15, können die Slaves über ein entsprechendes Blinken bzw. Leuchten eines Leuchtmittels die Information kodieren. Ein Benutzer oder ein Dekodiergerät sieht bzw. erkennt dann das Blinken des Slaves und kann daraus die dekodierte Information, wie beispielsweise die Startadresse des jeweiligen Slaves, ableiten. Statt zu blinken, können die Slaves auch andere erkennbare Signale, wie beispielsweise akustische Signale aussenden.

Wie bereits oben beschrieben kann ein Teilnehmer, anstatt die eigene Startadresse und die Startadresse des Nachfolgers zu senden, auch die eigene Startadresse und die zuletzt benutzte eigene Adresse übersenden. Genauso ist es vorstellbar, dass ein Teilnehmer die eigene Startadresse und die eigene Kanalanzahl sendet.

Der Master 21 kann nach Empfang einer Nachricht vom letzten Slave 22, 23 auf den Abschluss des Adressiervorgangs schließen. Er kann dabei die Anzahl der verwendeten Kanaladressen im System erkennen und somit feststellen, ob Kanalzahlverletzungen aufgetreten sind. Beispielsweise kann der Master 21 nur 256 Kanäle ansteuern können. Werden 350 verbrauchte Kanäle gemeldet, so folgt daraus, dass der Master 21 nicht alle Kanäle ansteuern kann.

Falls alle Geräte eine identische Kanalzahl haben und diese Kanalzahl dem Master 21 bekannt ist, so kann der Master auch auf die Anzahl der Geräte pro System schließen. Wenn der Master 21 die Anzahl und Art der eingesetzten Slaves 22, 23 im System vorher bereits kennt, z.B. durch manuelle Eingabe o.ä., kann er einen Vergleich durchführen, ob die aufgrund der geplanten angeschlossenen Slaves 22, 23 benötigte Kanalzahl mit der zurückgemeldeten Kanalzahl übereinstimmt. Ist dies der Fall, so erkennt der Master 21, dass die Adressierung korrekt durchgeführt wurde. Andernfalls sind entweder andere oder weniger/mehr Slaves 22, 23 im System bzw. ein/mehrere Slave/Slaves 22, 23 hat/haben sich nicht korrekt gemeldet (z.B. bei Übertragungsfehlern). Auch dies kann dann durch den Master 21 erkannt werden.

Der Master 21 kann auch, z.B. nach der erfolgreichen Adressierung und/oder nach einem Betrieb, nach einer gewissen Zeit eine "Vergleichsadressierung" durchführen. Von der "ersten" Adressierung ist dem Master 21 Anzahl der verbrauchten Kanäle bekannt. Der Master 21 löst nun eine Vergleichsadressierung aus, bei der die Slaves 22, 23 den Adressierprozess durchlaufen, wie er oben beschrieben ist.

Erhält der Master 21 nach Ende dieses Vorgangs die gleiche Kanalzahl zurück, ist die Anlage unverändert: jeder Teilnehmer hat sich gemeldet und dadurch zur gleichen Kanalzahl beigetragen. Weicht die empfange Kanalzahl jedoch ab, so liegt eine Änderung der des Systems oder ein Kommunikationsfehler vor. Diese Situationen können somit erkannt werden.

Die Vergleichsadressierung kann sich von der oben beschriebenen Adressierung dadurch unterscheiden, dass die Slaves 22, 23 die jeweils erhaltene Startadresse nicht tatsächlich übernehmen, sondern nur die nachfolgende Startadresse berechnen und weiterschicken. Das hat den Vorteil, dass eine bestehende Adressierung nicht überschrieben wird. Die Adresse aus der Vergleichsadressierung kann dabei (temporär) gespeichert werden (z.B. bis die nachfolgende Startadresse berechnet und/oder versendet wurde oder für eine vor bestimmte Zeit).

Für die Adressierung ist es jedoch wichtig, dass nur der jeweils aktuelle Slave 22 Informationen an den folgenden Slave 23 sendet. Eine gleichzeitige Adressinformationsversendung durch mehrere Slaves 22, 23 sollte vermieden werden. Sobald ein Slave 22, 23 die Startadresse für den jeweils nachfolgenden Slave 22, 23 versendet hat, ist daher vorgesehen, dass der Slave 22, 23 bis zum Abschluss des Adressiervorgangs keine weiteren Adressinformationen versendet.

**Bezugszeichenliste**

1-3 Betriebsgerät (Stand der Technik)

| 4 | Bus (Stand der Technik) |
|---|---|
| 5 | ringförmige Struktur (Stand der Technik) |
| 6 | Steuergerät (Stand der Technik) |
| 7 | Empfänger (Stand der Technik) |
| 8 | Sender (Stand der Technik) |
| 9, 10 | Anschlüsse zum Ansschliessen an den Bus (Stand der Technik) |
| 20 | Gebäudetechnik-System |
| 21 | Master (Busteilnehmer) |
| 22 | erster Slave (Busteilnehmer) |
| 23 | zweiter Slave (Busteilnehmer) |
| 24 | erste Leitung |
| 25 | zweite Leitung |
| 26 | dritte Leitung |
| 27 | Eingang eines Teilnehmers |
| 28 | Ausgang eines Teilnehmers |
| 29 | Bus |
| 30 | Leuchtmittel des ersten Slaves |
| 31 | Leuchtmittel des zweite Slaves |

**Patentansprüche**

1. Verfahren zum Betrieb eines Gebäudetechnik-Bussystems (20), das mehrere Teilnehmer (21, 22, 23), darunter wenigstens einen Teilnehmer in Form eines Betriebsgeräts für Leuchtmittel, aufweist, wobei ein Teilnehmer als Master (21) ausgebildet ist und andere Teilnehmer als Slave (22, 23) ausgebildet sind,

   a) wobei die mehreren Teilnehmer (21, 22, 23) mittels eines Daisy Chain Bus (29) kommunizieren,
   b) wobei der Daisy Chain Bus (29) wenigstens für eine Phase einer Vergabe einer Adresse an die Teilnehmer (21, 22, 23), und eine Phase eines Leuchtbetriebs der an das Betriebsgerät angeschlossenen Leuchtmittel zur Kommunikation verwendet wird,
   c) wobei der Adressvergabevorgang von dem als Master (21) ausgebildeten Teilnehmer ausgelöst wird (S1),
   **dadurch gekennzeichnet, dass**
   d) der Master (21) einem ersten Slave (22), der in Serie mit dem Master (21) verbunden ist, eine Startadresse (Adr1) zuweist;
   e) wobei jeder als Slave ausgebildeter Teilnehmer eine für ihn bestimmte Startadresse für einen ersten benötigten Steuerungskanal, sowie eine Anzahl von zusätzlichen Adressen für zusätzlich benötigte Steuerungskanäle besetzt;
   f) wobei ein vorstehender Slave (22), der in Serie mit einem nachstehenden Slave (23) verbunden ist, folgende Information an den nachstehenden Slave (23) sendet:

      i) die für den nachstehenden Slave als nächstes zur Verfügung stehende Adresse,

      ii) oder, alternativ, die letzt-besetze Adresse, sodass aus dieser Information die Startadresse (Adr3) für den nachstehenden Slave (23) gewonnen wird.

2. Verfahren nach Anspruch 1, wobei in einer Phase zeitlich nach der Adressvergabe, insbesondere in der Phase des Leuchtbetriebs von einem weiteren Teilnehmer, einer Master-Einheit (21) und/oder von einer Zentraleinheit Steuerbefehle, bspw. Dimmbefehle adressiert an das Betriebsgerät übermittelt werden.

3. Verfahren nach einem der vorhergehenden Ansprüche, wobei zur Bildung einer Ringbustopologie zusätzlich zu dem Daisy Chain Bus (29) ein Rückkanal (26) vorgesehen ist, über den die Teilnehmer Daten aussenden.

4. Verfahren nach einem der vorhergehenden Ansprüche, wobei der letzte Slave (23), der eine Adresse zugewiesen bekommt, dem Master (21) über den Bus (29) eine Nachricht sendet (S7), derart dass der Master (21) auf den Abschluss des Adressvergabevorgangs schließen kann.

5. Verfahren nach einem der vorhergehenden Ansprüche,

   - wobei der Master (21) nach Zuweisung einer Startadresse an den ersten Slave (22) gesperrt (S4) wird, sodass der Master für eine gewisse Zeit keine Daten senden darf, um mögliche Konflikte auf dem Bus zu verhindern, und
   - wobei der Adressvergabevorgang nach einem vorgegebenen Zeitablauf, in dem der Master (21) gesperrt ist, abgeschlossen wird.

6. Verfahren nach einem der vorhergehenden Ansprüche, wobei der Master (21) einen Rückmeldungsbefehl über den Bus (29) sendet (S11), woraufhin sukzessiv die hintereinander folgenden Slaves (22, 23) vom Master geforderte Daten bzw. Betriebsdaten aussenden (S13, S15).

7. Verfahren gemäß Anspruch 6, wobei die Daten dem Master (21) über den Bus (29) gesendet werden, oder als visuelles oder akustisches Signal via entsprechende visuelle oder akustische Mittel kodiert werden.

8. Verfahren gemäß Anspruch 6 oder 7, wobei während des Aussendens (S13, S15) von Daten der Master (21) gesperrt ist.

9. Bus-Gebäudetechniksystem (20), das einen Daisy Chain Bus (29) aufweist, wobei das Bus-Gebäudetechniksystem (20) ferner mehrere Teilnehmer (21, 22, 23), darunter wenigstens einen Teilnehmer in Form eines Betriebsgeräts für Leuchtmittel aufweist, wobei ein Teilnehmer als Master (21) ausgebildet ist und andere Teilnehmer als Slave (22, 23) ausgebildet sind,

a) wobei die mehreren Teilnehmer (21, 22, 23) derart ausgestaltet sind, dass sie mittels des Daisy Chain Bus (29) kommunizieren,
b) wobei der Daisy Chain Bus (29) wenigstens für eine Phase einer Vergabe einer Adresse an die Teilnehmer (21, 22, 23) und eine Phase eines Leuchtbetriebs der an das Betriebsgerät angeschlossenen Leuchtmittel zur Kommunikation verwendet wird,
c) wobei der als Master (21) ausgebildete Teilnehmer derart ausgestaltet ist, dass er den Adressvergabevorgang auslöst (S1),
**dadurch gekennzeichnet, dass**
d) der Master (21) einem ersten Slave (22), der in Serie mit dem Master (21) verbunden ist, eine Startadresse (Adr1) zuweist;
e) wobei jeder als Slave ausgebildeter Teilnehmer eine für ihn bestimmte Startadresse für einen ersten benötigten Steuerungskanal, sowie eine Anzahl von zusätzlichen Adressen für zusätzlich benötigte Steuerungskanäle besetzt;
f) wobei ein vorstehender Slave (22), der in Serie mit einem nachstehenden Slave (23) verbundenen ist, derart ausgestaltet ist, dass der vorstehende Slave (22) folgende Information an den nachstehenden Slave (23) sendet :

i) die für den nachstehenden Slave als nächstes zur Verfügung stehende Adresse,
ii) oder, alternativ, die letzt-besetze Adresse, sodass aus dieser Information die Startadresse (Adr3) für den nachstehenden Slave (23) gewonnen wird.

10. Bus-Gebäudetechniksystem (20) nach Anspruch 9, wobei in einer Phase zeitlich nach der Adressvergabe, insbesondere in der Phase des Leuchtbetriebs ein weiterer Teilnehmer, eine Master-Einheit (21) und/oder eine Zentraleinheit derart ausgestaltet sind, dass sie Steuerbefehle, bspw. Dimmbefehle adressiert an das Betriebsgerät übermitteln.

11. Bus-Gebäudetechniksystem (20) nach Anspruch 10, das zur Bildung einer Ringbustopologie zusätzlich zu dem Daisy Chain Bus (29) ferner einen Rückkanal (26) aufweist, über den die Teilnehmer Daten aussenden.

**Claims**

1. A method for operating a building-services engineering bus system (20), which has several subscribers (21, 22, 23), including at least one subscriber in the form of an operating device for lamps, wherein one subscriber is designed as a master (21) and another subscriber is designed as a slave (22, 23),

a) wherein the several subscribers (21, 22, 23) communicate by means of a daisy chain bus (29),
b) wherein the daisy chain bus (29) is used at least for one phase of an assignment of an address to the subscriber (21, 22, 23), and one phase of a lighting operation of the lamps connected to the operating device for the communication,
c) wherein the address assignment process is triggered (S1) by the subscriber designed as a master (21),
**characterized in that**
d) the master (21) assigns a start address (Adr1) to a first slave (22), which is connected in series with the master (21);
e) wherein each subscriber designed as a slave has a start address assigned to it for a first required control channel, as well as a number of additional addresses for additional required control channels;
f) wherein a preceding slave (22), which is connected in series with a following slave (23), sends the following information to the following slave (23):

i) the address available for the following slave as the next,
ii) or, alternatively, the last address taken, so that from this information the start address (Adr3) for the following slave (23) is obtained.

2. A method according to Claim 1, wherein in a phase temporally after the address assignment, in particular, in the phase of the lighting operation control commands, for example, dimming commands are transmitted addressed to the operating device by an additional subscriber, a master-unit (21) and/or by a central unit.

3. A method according to one of the preceding claims, wherein a feedback channel (26) is provided for the formation of a ring bus topology in addition to the daisy chain bus (29), via which the subscriber sends out data.

4. A method according to one of the preceding claims, wherein the last slave (23), which gets assigned an address, sends a message (S7) to the master (21) via the bus (29), in such a manner that the master (21) can stop upon the conclusion of the address assignment process.

**5.** A method according to one of the preceding claims,

- wherein the master (21) is blocked (S4) after assignment of a start address to the first slave (22), so that the master may send no data for a certain time, in order to prevent possible conflicts on the bus, and
- wherein the address assignment process is concluded after a predefined passage of time, in which the master (21) is blocked.

**6.** A method according to one of the preceding claims, wherein the master (21) sends (S11) a feedback command via the bus (29), whereupon the following slaves (22, 23) one after the other successively send out data or operating data required by the master (S13, S15).

**7.** A method according to Claim 6, wherein the data are sent to the master (21) via the bus (29), or are coded as visual or acoustical signals via corresponding visual or acoustical means.

**8.** A method according to Claim 6 or 7, wherein during the transmission (S13, S15) of data the master (21) is blocked.

**9.** A bus-building services engineering system (20), which has a daisy chain bus (29), wherein the bus-building services engineering system (20) also has several subscribers (21, 22, 23), including at least one subscriber in the form of an operating device for lamps, wherein a subscriber is designed as a master (21) and other subscribers are designed as slaves (22, 23),

   **a)** wherein the several subscribers (21, 22, 23) are designed in such a way that they communicate by means of the daisy chain bus (29),
   **b)** wherein the daisy chain bus (29) is used at least for one phase of an assignment of an address to the subscriber (21, 22, 23) and one phase of a lighting operation of the lamps connected to the operating device for the communication,
   **c)** wherein the subscriber designed as a master (21) is designed in such a manner, that it triggers the address assignment process (S1),
   **characterized in that**
   **d)** the master (21) assigns a start address (Adr1) to the first slave (22), which is connected in series with the master (21);
   **e)** wherein each subscriber designed as a slave has a start address assigned to it for a first required control channel, as well as a number of additional addresses for additionally required control channels;
   **f)** wherein an above slave (22), which is connected in series with a following slave (23), is designed in such a manner that the preceding slave (22) sends the following information to the following slave (23):

      **i)** the address available for the following slave as the next,
      **ii)** or, alternatively, the last address taken, so that from this information the start address (Adr3) for the following slave (23) is obtained.

**10.** A bus-building services engineering system (20) according to Claim 9, wherein in a phase temporally after the address assignment, in particular, in the phase of the lighting operation an additional subscriber, a master-unit (21) and/or a central unit is designed in such a manner that it transmits control commands, for example, dimming commands addressed to the operating device.

**11.** A bus-building services engineering system (20) according to Claim 10, which also has a feedback channel (26) in addition to the daisy chain bus (29) for the formation of a ring bus topology, via which the subscriber sends out data.

**Revendications**

**1.** Procédé d'exploitation d'un système de bus domotique (20) qui comprend plusieurs abonnés (21, 22, 23), dont au moins un abonné sous la forme d'un appareil d'exploitation pour moyens d'éclairage, un abonné étant conçu comme un maître (21) et d'autres abonnés étant conçus comme des esclaves (22, 23),

   a) les plusieurs abonnés (21, 22, 23) communiquant au moyen d'un bus en guirlande (29),
   b) le bus en guirlande (29) étant utilisé au moins pour une phase d'allocation d'une adresse aux abonnés (21, 22, 23) et une phase d'une exploitation d'éclairage des moyens d'éclairage raccordés à l'appareil d'exploitation pour la communication,
   c) le processus d'allocation d'adresse étant déclenché (S1) par l'abonné conçu en tant que maître (21),
   **caractérisé en ce que**
   d) le maître (21) alloue, à un premier esclave (22), qui est branché en série avec le maître (21), une adresse de départ (Adr1) ;
   e) chaque abonné conçu comme un esclave occupe une adresse de départ déterminée pour lui, pour un premier canal de commande nécessaire, ainsi qu'un nombre d'adresses supplémentaires pour des canaux de commandes supplémentaires nécessaires ;

f) un esclave en amont (22), qui est branché en série avec un esclave en aval (23), envoie à l'esclave en aval (23) les informations suivantes :

    i) l'adresse disponible suivante pour l'esclave en aval,

    ii) ou, en variante, l'adresse occupée en dernier,

    de façon à ce que, à partir de ces informations, l'adresse de départ (Adr3) soit extraites pour l'esclave en aval (23).

**2.** Procédé selon la revendication 1,
dans une phase temporelle après l'allocation d'adresse, plus particulièrement dans la phase de l'exploitation d'éclairage un abonné supplémentaire, une unité maître (21) et/ou une unité centrale transmet des instructions de commande, par exemple des instructions de gradation à l'appareil d'exploitation.

**3.** Procédé selon l'une des revendications précédentes,
pour la formation d'une topologie de bus annulaire, en plus du bus en guirlande (29), un canal de retour (26) est prévu, par l'intermédiaire duquel les abonnés envoient des données.

**4.** Procédé selon l'une des revendications précédentes,
le dernier esclave (23), auquel est allouée une adresse, envoie (S7) au maître (21), par l'intermédiaire du bus (29), un message, de façon à ce que le maître (21) puisse en déduire la fin du processus d'allocation d'adresse.

**5.** Procédé selon l'une des revendications précédentes,

    - le maître (21) étant bloqué (S4) après l'allocation d'une adresse de départ au premier esclave (22), de façon à ce que le maître ne puisse envoyer aucune donnée pendant un temps déterminé, afin d'éviter des conflits sur le bus, et
    - le processus d'allocation d'adresse étant terminé après un temps prédéterminé, au cours duquel le maître (21) est bloqué.

**6.** Procédé selon l'une des revendications précédentes,
le maître (21) envoyant (S11) une instruction de retour par l'intermédiaire du bus (29), les esclaves (22, 23) successifs envoyant (S13, S15) alors successivement les données ou données d'exploitation demandées par le maître.

**7.** Procédé selon la revendication 6,
les données étant envoyées au maître (21) par l'intermédiaire du bus (29), ou étant codées sous la forme d'un signal visuel ou acoustique via des moyens visuels ou acoustiques correspondants.

**8.** Procédé selon la revendication 6 ou 7,
pendant l'envoi (S13, S15) des données, le maître (21) est bloqué.

**9.** Système de bus domotique (20) qui comprend un bus en guirlande (29), le système de bus domotique (20) comprend en outre plusieurs abonnés (21, 22, 23), dont au moins un abonné sous la forme d'un appareil d'exploitation pour des moyens d'éclairage, un abonné étant conçu comme un maître (21) et d'autres abonnées étant conçus comme des esclaves (22, 23),

    a) les plusieurs abonnés (21, 22, 23) étant conçus de façon à communiquer au moyen du bus en guirlande (29),
    b) le bus en guirlande (29) étant utilisé au moins pour une phase d'allocation d'une adresse aux abonnés (21, 22, 23) et une phase d'une exploitation d'éclairage des moyens d'éclairage reliés à l'appareil d'exploitation pour la communication,
    c) l'abonné conçu comme un maître (21) étant conçu de façon à ce qu'il déclenche (S1) le processus d'allocation d'adresse,
    **caractérisé en ce que**
    d) le maître (21) alloue, à un premier esclave (22), qui est branché en série avec le maître (21), une adresse de départ (adr1) ;
    e) chaque abonné conçu comme un esclave occupant une adresse de départ déterminée pour lui pour un premier canal de commande nécessaire, ainsi qu'un nombre d'adresses supplémentaires pour des canaux de commandes supplémentaires nécessaires ;
    f) un esclave en amont (22), qui est branché en série avec un esclave en aval (23), est conçu de façon à ce que l'esclave en amont (22) envoie à l'esclave en aval (23), les informations suivantes :

        i) l'adresse suivante disponible pour l'esclave en aval,
        ii) ou, en variante, la dernière adresse occupée,
        de façon à ce que, à partir de ces informations, l'adresse de départ (Adr3) soit extraite pour l'esclave en aval (23).

**10.** Système de bus domotique (20) selon la revendication 9, dans une phase temporellement après l'allocation d'adresse, plus particulièrement dans la phase de l'exploitation d'éclairage, un abonné supplémentaire, une unité maître (21) et/ou une unité centrale étant conçu de façon à transmettre des instructions de commande ou des instructions de gradation à l'appareil d'exploitation.

11. Système de bus domotique (20) selon la revendication 10, qui comprend, pour la formation d'une topologie de bus annulaire, en plus du bus en guirlande (29), en outre un canal de retour (26) par l'intermédiaire duquel les abonnés envoient des données.

Fig. 1

Stand der Technik

Fig. 2

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009040014 A1
- US 20040160199 A1
- WO 2006107199 A2
- WO 2009011898 A2
- EP 1320222 A1